Europäisches Patentamt

European Patent Office

Office européen des brevets

(19)

(11) EP 0 833 216 A2

(12) EUROPEAN PATENT APPLICATION

(43) Date of publication:
01.04.1998 Bulletin 1998/14

(51) Int Cl.6: G03G 15/01, H04N 1/409,
H04N 1/58

(21) Application number: 97307396.8

(22) Date of filing: 22.09.1997

(84) Designated Contracting States:
AT BE CH DE DK ES FI FR GB GR IE IT LI LU MC
NL PT SE

(30) Priority: 27.09.1996 US 723212

(71) Applicant: XEROX CORPORATION
Rochester New York 14644 (US)

(72) Inventors:
• Goodman, Nancy B.
Webster, NY 14580 (US)

• Torpey, Peter A.
Webster, NY 14580 (US)
• Harrington, Steven J.
Webster, NY 14580 (US)
• Smith, Bradley W.
Castile, NY 14427 (US)

(74) Representative: Mackett, Margaret Dawn et al
Rank Xerox Ltd
Patent Department
Parkway
Marlow Buckinghamshire SL7 1YL (GB)

(54) Registration of color images

(57)     A method for mitigating or eliminating a halo effect in a printer when black objects are adjacent color objects is described herein. In a full color xerographic printer, particularly an image on image printer in which full color composite images are imaged and developed in a single pass through the xerographic system, an image processing method is described to reduce or eliminate the halo effect. When a black object is to be placed adjacent a colored object (e.g. black text on a magenta background) a determination is made to locate the boundary between the black and the colorant. The black pixels immediately adjacent the colored objects are created using process black (a combination of cyan, magenta and yellow colorants) while the central and other black areas not adjacent a colored object are created using black toner only. Various half bitting approaches are used to balance the trade off between edge sharpness and elimination of halo effect.

FIG. 3

EP 0 833 216 A2

## Description

This invention relates generally to the registration of color images in a color image output terminal (IOT), and more particularly concerns an improved color image alignment system utilizing an improved method for providing optimum optical contrast for detecting registration marks in full color electrophotographic printing machines.

In a typical electrophotographic printing process, a photoconductive member is charged to a substantially uniform potential so as to sensitize the surface thereof. The charged portion of the photoconductive member is exposed to a light image of an original document being reproduced. Exposure of the charged photoconductive member selectively dissipates the charges thereon in the irradiated areas. This records an electrostatic latent image on the photoconductive member corresponding to the informational areas contained within the original document. After the electrostatic latent image is recorded on the photoconductive member, the latent image is developed by bringing a developer material into contact therewith. Generally, the developer material comprises toner particles adhering triboelectrically to carrier granules. The toner particles are attracted from the carrier granules to the latent image forming a toner powder image on the photoconductive member. The toner powder image is then transferred from the photoconductive member to a copy sheet. The toner particles are heated to permanently affix the powder image to the copy sheet.

The foregoing generally describes a typical black and white electrophotographic printing machine. With the advent of multicolor electrophotography, it is desirable to use an architecture which comprises a plurality of image forming stations. One example of the plural image forming station architecture utilizes an image on image system in which the photoreceptive member is recharged, reimaged and developed for each color separation. This charging, imaging, developing and recharging, reimaging and developing (REaD-Recharge, Expose and Develop) is usually done in a single revolution of the photoreceptor as compared with multipass architectures which allow image on image to be achieved with a single charge, recharge system and imager, etc. This architecture offers a high potential for throughput and image quality.

"Halo" is a term used to describe a thin white line next to a feature of one color where it is supposed to be printed adjacent to another color. This is particularly objectionable when the halo completely surrounds black text in a color background or color text in a black background. This effect is difficult at best to remove by improvements in the physical process.

It is desirable to be able to remove or minimize the effects of halo through various image processing techniques. This invention proposes to use a variety of image processing algorithms to minimize the visual impact of halo.

Trapping is a process that is known for correcting non-filled or white areas between different color separations in a color print. Generally this approach involves expanding one of the regions which abut so as to fill the gap or misregistered border with a color so as to minimize the visual effect. The border that has been so expanded is referred to as a "trap" and the zone within which the color is added is called the "trap zone". Examples of such methods are given in US-A-4 583 116; US-A-4 700 399; US-A-4 931 861; US-A-5 204 918; US-A-5 241 396; US-A-5 386 223 and US-A-5 313 570.

In accordance with one aspect of the present invention, there is provided a method for mitigating visual halo effect in an electrophotographic color printing machine comprising determining the boundary between a black pixel and a non-black pixel and printing a boundary black pixel using process black as a combination of cyan, magenta and yellow toner particles.

Other features of the present invention will become apparent, by way of example only, to the following description and reference to the drawings, in which:-

Figure 1 is a schematic diagram of a four color image output terminal;
Figure 2 is a schematic representation of the black/color edge detection circuit;
Figure 3 is a diagram illustrating the replacement of all boundary black with process black;
Figure 4 is a block representation of a partial bitting scheme for the replacement of black with process black; and
Figure 5 is a block diagram representing the partial bitting scheme for replacing black with process black when black abuts a color and a white area.

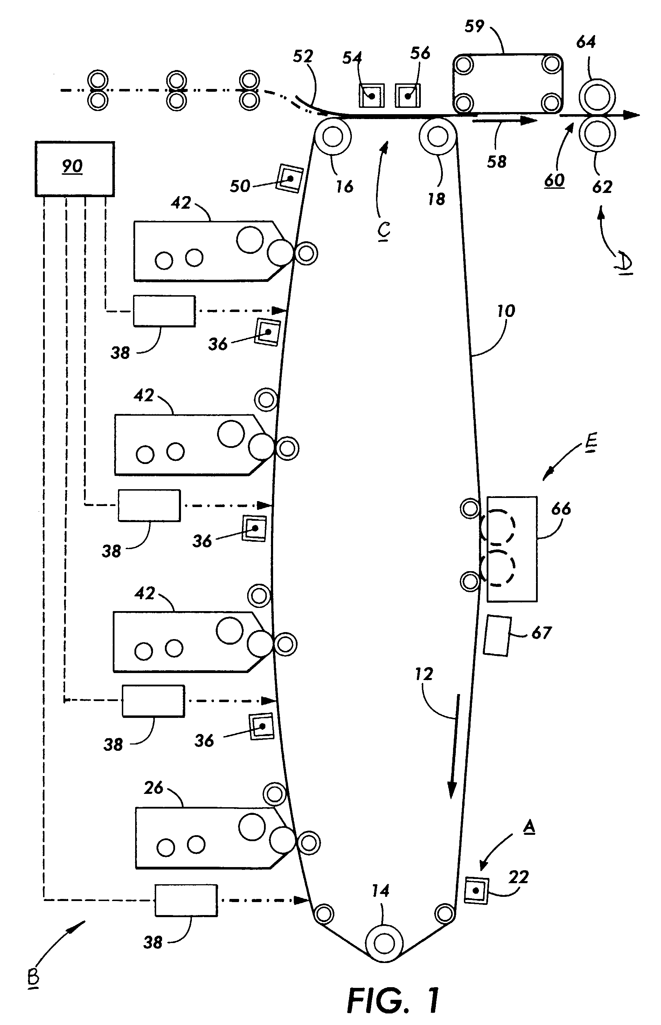

Turning now to Figure 1, the electrophotographic printing machine of the present invention uses a charge retentive surface in the form of an Active Matrix (AMAT) photoreceptor belt 10 supported for movement in the direction indicated by arrow 12, for advancing sequentially through the various xerographic process stations. The belt 10 is entrained about a drive roller 14 and two tension rollers 16 and 18 and the roller 14 is operatively connected to a drive motor (not shown) for effecting movement of the belt through the xerographic stations.

With continued reference to Figure 1, a portion of belt 10 passes through charging station A where a corona generating device, indicated generally by the reference numeral 22, charges the photoconductive surface of belt 10 to a relative high, substantially uniform, preferably negative potential.

Next, the charged portion of photoconductive surface is advanced through an imaging/exposure station B. At imaging/exposure station B, a controller, indicated generally by reference numeral 90, receives the image signals representing the desired output image and processes these signals to convert them to the various color separations of the image which is transmitted to a laser based output scanning device 38 which causes the charge retentive surface to be discharged in accordance with the output from the scanning device. Preferably the scanning device is a laser Raster Output Scanner (ROS). Alternatively, the ROS could be replaced by other xerographic exposure devices such as LED arrays.

The photoreceptor belt 10, which is initially charged to a voltage $V_o$, undergoes dark decay to a level Vddp equal to about -500V. When exposed at the exposure station it is discharged to $V_{background}$ equal to about -50V. Thus after exposure, the photoreceptor belt 10 contains a monopolar voltage profile of high and low voltages, the former corresponding to charged areas and the latter corresponding to discharged or background areas.

At a first development station , a magnetic brush developer structure, indicated generally by the reference numeral 26 advances insulative magnetic brush (IMB) material into contact with the electrostatic latent image. The development structure 26 comprises a plurality of magnetic brush roller members. These magnetic brush rollers present, for example, charged black toner material to the image areas for development thereof. Appropriate developer biasing is accomplished via a power supply (not shown).

A corona recharge device 36 having a high output current vs. control surface voltage (I/V) characteristic slope is employed for raising the voltage level of both the toned and untoned areas on the photoreceptor belt 10 to a substantially uniform level. The recharging device 36 serves to recharge the photoreceptor belt 10 to a predetermined level.

A second exposure or imaging device 38 which may comprise a laser based output structure is utilized for selectively discharging the photoreceptor belt 10 on toned areas and/or bare areas, pursuant to the image to be developed with the second color developer. At this point, the photoreceptor belt 10 contains toned and untoned areas at relatively high voltage levels and toned and untoned areas at relatively low voltage levels. These low voltage areas represent image areas which are developed using discharged area development (DAD). To this end, a negatively charged, developer material (not shown) comprising color toner is employed. The toner, which by way of example may be yellow, is contained in a developer housing structure 42 disposed at a second developer station and is presented to the latent images on the photoreceptor belt 10 by way of a magnetic brush roller and a non-contacting donor roller to create a toner powder cloud. A power supply (not shown) serves to electrically bias the developer structure to a level effective to develop the DAD image areas with negatively charged yellow toner particles.

The above procedure is repeated for a third imager for a third suitable color toner such as magenta and for a fourth imager and suitable color toner such as cyan. In this manner a full color composite toner image is developed on the photoreceptor belt. The third and fourth imaging and developer stations are identical, except for the color of the toner particles, to the second station and are therefore numbered the same.

To the extent to which some toner charge is totally neutralized, or the polarity reversed, thereby causing the composite image developed on the photoreceptor belt 10 to consist of both positive and negative toner, a negative pre-transfer dicorotron member 50 is provided to condition the toner for effective transfer to a substrate using positive corona discharge.

Subsequent to image development a sheet of support material 52 is moved into contact with the toner images at transfer station C. The sheet of support material is advanced to transfer station by conventional sheet feeding apparatus, not shown. Preferably, the sheet feeding apparatus includes a feed roll contacting the uppermost sheet of a stack copy sheets. The feed rolls rotate so as to advance the uppermost sheet from stack into a chute which directs the advancing sheet of support material into contact with photoconductive surface of belt 10 in a timed sequence so that the toner powder image developed thereon contacts the advancing sheet of support material at transfer station.

The transfer station C includes a transfer dicorotron 54 which sprays positive ions onto the backside of sheet 52. This attracts the negatively charged toner powder images from the belt 10 to sheet 52. A detack dicorotron 56 is provided for facilitating stripping of the sheets from the belt 10.

After transfer, the sheet continues to move, in the direction of arrow 58, onto a conveyor 59 which advances the sheet to a fusing station D. The fusing station D includes a fuser assembly, indicated generally by the reference numeral 60, which permanently affixes the transferred powder image to sheet 52. Preferably, fuser assembly 60 comprises a heated fuser roller 62 and a backup or pressure roller 64. Sheet 52 passes between fuser roller 62 and backup roller 64 with the toner powder image contacting fuser roller 62. In this manner, the toner powder images are permanently affixed to sheet 52 after it is allowed to cool. After fusing, a chute, not shown, guides the advancing sheets 52 to a finishing device or catch tray, not shown, for subsequent removal from the printing machine by the operator.

After the sheet of support material is separated from photoconductive surface of belt 10, the residual toner particles carried by the non-image areas on the photoconductive surface are removed therefrom. These particles are removed at a cleaning station E using a cleaning brush structure contained in a housing 66 and cleaning blade 67. The blade may be configured in either a wiper or doctor position depending on the application. Subsequent to cleaning, a discharge lamp (not shown) floods photoconductive surface 10 with light to dissipate any residual electrostatic charge remaining thereon prior to the charging thereof for the next successive imaging cycle.

It is believed that the foregoing description is sufficient for the purposes of the present application to illustrate the general operation of a single pass image on image color printing machine.

As described above color printing is carried out by using four colorants, cyan, magenta, yellow, and black. The colorants are applied in separate stages and this can lead to problems if the registration between each color separation is not precise. Consider, for sample, printing cyan text on a black background. In creating a representation of an image on a computer for subsequent control of the printing device, one must not only describe where the cyan should be placed, but one must also describe corresponding holes in the black background so that the cyan will not be rendered on top of the black. If when printing, however, the cyan is not perfectly aligned with the black, white gaps will be seen between the black and cyan edges. This problem, known as halo and discussed above, can also occur for black text on a cyan background, or more generally at the boundary between any two color separations (e.g. red and green, or magenta and cyan). Often one of the colors is black, and an approach that can be used to reduce this problem for this case is to dilate the non-black edge so that it overlaps the black. The non-black color will be hidden by the black at the overlap and since the colored area is now larger than the black hole there is room for some registration error before the gap between the toners becomes exposed. This process is an example of trapping.

On a system as described above, however, in which black toner is placed first upon the photoreceptive member, even in the absence of misregistration, the process described above does not solve the problem. This is due to the inability to image through the black toner and as a result of fringe field effects along the edge of the black toner an inability to place a colored toner immediately adjacent the black toner.

In a very interesting experiment, the same test pattern was printed twice on one page. The top half of the page had 100% grey component replacement (GCR) meaning that all black areas were printed with black toner. The bottom half of the page had 0% GCR, meaning that all black areas were printed with process black --- a combination of cyan, magenta and yellow, with no black toner anywhere.

Although the edges were sharper and the blacks blacker in the top half of the page (100% GCR), there was also a halo of approximately 80μm around all black features where they abutted color areas. In contrast, there was no visible halo on the bottom half of the page (0% GCR), even when viewed under magnification. In general, wherever the color(s) comprising the background were continuous through the text or other features, there was no visible halo. An example of this would be blue (cyan plus magenta) text on a magenta background.

One approach to making raster characters look better and to manipulate edges of an image is referred to as "nth-bitting" or partial bitting. These processes turn on selected pixels along the edge of an image or along an image boundary to mesh image portions or to improve the visual characteristics of an image edge or boundary. Half-bitting is a subset of "nth-bitting" which turns on an equal number of pixels to those which are turned off. Various techniques of halftone processes and "nth-bitting" are described in US-A-4 149 194; US-A-4 808 984; US-A-4 873 515; US-A-4 907 282; US-A-4 918 626; US-A-5 223 953; and US-A-5 333 249.

In light of these observations, we propose several options for image processing of an image to mitigate or eliminate halo on color prints:

(1) Use 0% GCR or full process black for all black features. Unfortunately, this has the side effect of producing black features which are less black, have less sharp edges, use approximately 3 times as much toner, and have a greater pile height.

(2) The same as (1), but only use 0% GCR for black features which are adjacent to another color. This leaves black text on a white ground unaffected. However, otherwise identical black features on a white background and on a color background will not print out the same.

(3) Make all black features a true black, but replace their outermost 1-2 bits with process black. This will use slightly more toner and have a slight negative impact on edge sharpness, but of a much smaller lateral extent than the halo which is being removed.

(4) The same as (3), but only replace the outermost 1-2 bits of black features with process black features where they are adjacent to another color. This leaves black text on a white ground unaffected. However, otherwise identical black features on a white background and on a color background will not print out the same.

(5) Use half-bitting on all black edges. This will reduce the fields at the edges of black features, but may also have a negative impact on edge sharpness. The reduced edge field strength will significantly reduce the magnitude of the halo.

(6) The same as (5), but only half-bit black edges where they are adjacent to another color. This leaves black text on a white ground unaffected. However, otherwise identical black features on a white background and on a color background will not print out the same.

(7) Partial-bit the edges of black features so that a fraction, f, of the bits on the periphery are made with black toner and the rest, or 1-f, of the bits are made with process black. The half-bitting sub-case of this method (f = 0.5) results in a checkerboard pattern on the edges. One can tune the value off to balance the trade-off between halo and edge sharpness.

(8) The same as (7), but only partial-bit the edges of black features where they are adjacent to another color. This leaves black text on a white background unaffected. However, otherwise identical black features on a white background and on a color background will not print out the same.

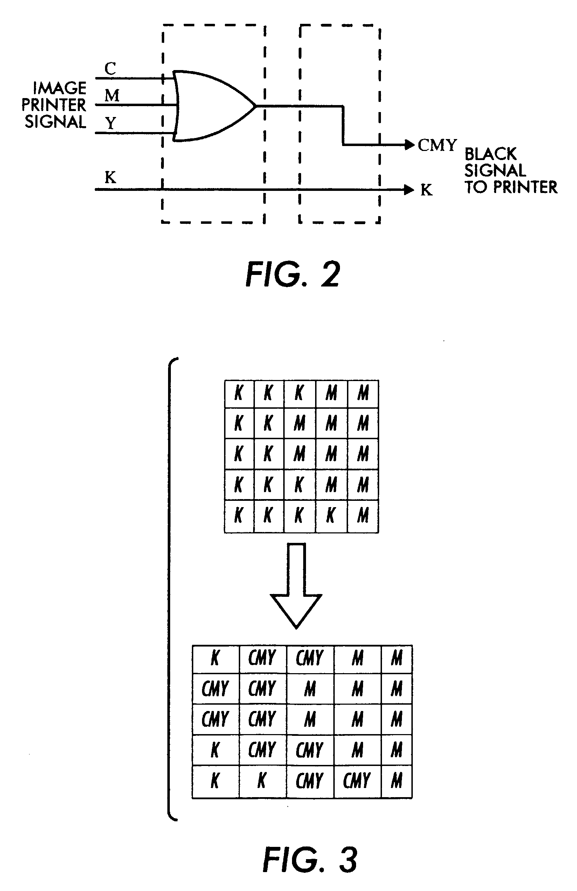

Figure 2 illustrates a logic circuit for determining a color to black boundary for implementing the method of the invention herein. The basis of the boundary determination is to examine a pixel that is next to a black (K) pixel and determine if it is to be printed as a color other than white. If so, then each adjacent, or some function of the total number of adjacent black pixels should be printed using process black.

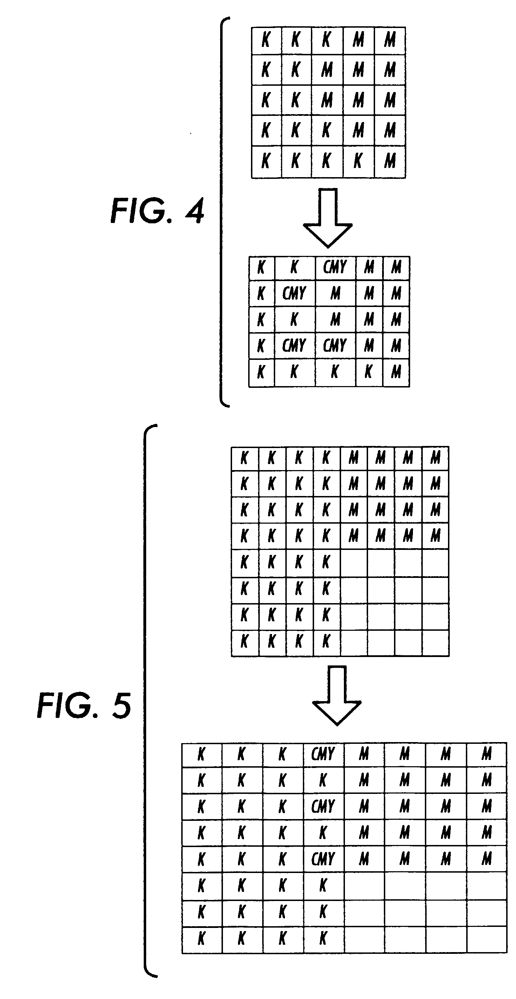

Figures 3, 4 and 5 illustrate various techniques for printing process black pixels next to pixels of other colors according to the invention herein. Each of these matrices is illustrative only as there are many other variations possible to balance the competing qualities of edge sharpness versus mitigation of halo effect.

One implementation of using process black for boundary pixels is as follows. The boundary edge pixels that should be printed in process black can be identified from the values in a three plane image buffer as follows:

$$E(i, j)=\{(((C(i+1, j) \vee M(i+1, j) \vee Y(i+1, j)) \wedge \neg(C(i+1, j) \wedge M(i+1, j) \wedge Y(i+1, j)))$$

$$\vee((C(i-1, j) \vee M(i-1, j) \vee Y(i-1, j)) \wedge \neg(C(i-1, j) \wedge M(i-1, j) \wedge Y(i-1, j)))$$

$$\vee((C(i, j+1) \vee M(i, j+1) \vee Y(i, j+1)) \wedge \neg(C(i, j+1) \wedge M(i, j+1) \wedge Y(i, j+1)))$$

$$\vee((C(i, j-1) \vee M(i, j-1) \vee Y(i, j-1)) \wedge \neg(C(i, j-1) \wedge M(i, j-1) \wedge Y(i, j-1)))\}$$

$$\wedge(C(i, j) \wedge M(i, j) \wedge Y(i, j))$$

where $C(i, j)$, $M(i, j)$ and $Y(i, j)$ are the cyan, magenta and yellow bit values respectively for the pixel at position $(i, j)$ and the symbols $\vee$, $\wedge$, and $\neg$ indicate the logical operations of OR, AND and NOT.

One might also consider ignoring the yellow/black boundary, since a white gap next to yellow is difficult to see. This simplifies the test and on the edge one would only print using the three colorants cyan, magenta and yellow instead of black. The test would be:

$$E(i, j)=\{(((C(i+1, j) \vee M(i+1, j)) \wedge \neg(C(i+1, j) \wedge M(i+1, j) \wedge Y(i+1, j)))$$

$$\vee((C(i-1, j) \vee M(i-1, j)) \wedge \neg(C(i-1, j) \wedge M(i-1, j) \wedge Y(i-1, j)))$$

$$\vee((C(i, j+1) \vee M(i, j+1)) \wedge \neg(C(i, j+1) \wedge M(i, j+1) \wedge Y(i, j+1)))$$

$$\vee((C(i, j-1) \vee M(i, j-1)) \wedge \neg(C(i, j-1) \wedge M(i, j-1) \wedge Y(i, j-1)))\}$$

$$\wedge(C(i, j) \wedge M(i, j) \wedge Y(i, j))$$

In recapitulation, there is provided a method for mitigating or eliminating a halo effect in a printer when black objects are adjacent color objects. In a full color xerographic printer, particularly an image on image printer in which full color composite images are imaged and developed in a single pass through the xerographic system, an image processing method is described to reduce or eliminate the halo effect. When a black object is to be placed adjacent a colored object (i.e. black text on a magenta background), a determination is made to locate the boundary between the black and the colorant. The black pixels immediately adjacent the colored objects are created using process black (a combination of cyan, magenta and yellow colorants) while the central and other black areas not adjacent a colored object are created using black toner only. Various half bitting approaches are used to balance the trade off between edge sharpness and elimination of halo effect.

It is, therefore, apparent that there has been provided in accordance with the present invention, a method for reducing halo effect that fully satisfies the aims and advantages hereinbefore set forth. While this invention has been described in conjunction with a specific embodiment thereof, it is evident that many alternatives, modifications, and variations will be apparent to those skilled in the art. Accordingly, it is intended to embrace all such alternatives, modifications and variations that fall within the scope of the appended claims.

**Claims**

1. A method for mitigating visual halo effect in an electrophotographic color printing machine comprising:

   determining the boundary between a black pixel and a non-black pixel; and
   printing a boundary black pixel using process black as a combination of cyan, magenta and yellow toner particles.

2. A method according to claim 1, wherein said determining step is limited to determining where said non-black pixel is non-white.

3. A method according to claim 2, where said non-black determination ignores the presence or absence of yellow.

4. A method according to any one of claims 1 to 3, wherein said printing step further comprises printing only a portion of the boundary black pixels using process black wherein bits to print the portion of process black boundary pixels are chosen as a balancing function between edge sharpness and halo mitigation.

5. A method according to claim 4, wherein said balancing function comprises half-bitting.

6. A method according to claim 4, wherein said balancing function comprises partial bitting wherein a fraction, f, of the bits on a boundary are made with black toner and the remainder of the boundary bits, 1-f, are made with process black.

FIG. 1

IMAGE
PRINTER
SIGNAL

C
M
Y

K

CMY

K

BLACK
SIGNAL
TO PRINTER

## FIG. 2

| K | K | K | M | M |
|---|---|---|---|---|
| K | K | M | M | M |
| K | K | M | M | M |
| K | K | K | M | M |
| K | K | K | K | M |

| K | CMY | CMY | M | M |
|---|---|---|---|---|
| CMY | CMY | M | M | M |
| CMY | CMY | M | M | M |
| K | CMY | CMY | M | M |
| K | K | CMY | CMY | M |

## FIG. 3

*FIG. 4*

*FIG. 5*